# EUROPEAN PATENT APPLICATION

(11) **EP 2 228 828 A1**
(43) Date of publication of application: **15.09.2010**
(21) Application number: 10154379.1
(22) Date of filing: 23.02.2010
(51) Int. Cl.: H01L 31/04

(54) **High-efficiency generator of controlled-spectrum radiation**

(30) Priority: 13.03.2009 IT TO20090190
(71) Applicant: SAVIO S.p.A., 10050 Chiusa San Michele (Torino) (IT)
(72) Inventor: Balbo di Viandio, Aimone, I-10050, Chiusa San Michele (Torino) (IT); Palazzetti, Mario, I-10050, Chiusa San Michele (IT)
(74) Representative: Marchitelli, Mauro

(57) **Abstract**

A high-efficiency generator of controlled-spectrum radiation, comprising:
- an adiabatic hollow body (12) with an internal reflecting surface (14) having a paraboloidal shape;
- a black body (18) set in the focus of said paraboloidal reflecting surface (14);
- means (26, 28; 30) for heating the black body (18) to a temperature of emission of electromagnetic radiation;
- a non-dissipative plane filter (20) orthogonal to the longitudinal axis (16) of said paraboloidal reflecting surface (14), designed to transmit radiation with a wavelength comprised in a pre-set band and to reflect towards said paraboloidal surface (14) radiation with a wavelength external to said pre-set band; and
- a mirror (22) with a paraboloidal reflecting surface set between the black body (18) and said filter (20), said mirror (22) being set to prevent the radiation emitted by the black body (18) from reaching said filter (20) directly.

## Description

The present invention relates to a high-efficiency generator of controlled-spectrum radiation.

Generation of controlled-spectrum radiation can be used in multiple applications, such as for example for the production of high-efficiency lamps with a high quality of light or else for illuminating photovoltaic cells with radiation that can be converted by the photovoltaic cells with maximum efficiency or for biological applications.

The object of the present invention is to provide a controlled-spectrum radiation generator that will enable optimization of the efficiency of emission.

According to the present invention, said object is achieved by a generator of radiation having the characteristics forming the subject of Claim 1. The present invention moreover regards a thermo-photovoltaic device for the production of electrical energy and a high-efficiency lighting device that use such a generator of radiation.

The present invention will now be described in detail with reference to the attached drawings, which are provided purely by way of non-limiting example and in which:
- Figure 1 is a perspective view of a thermo-photovoltaic device that uses a generator of radiation according to the present invention;
- Figure 2 is a side view of the device of Figure 1; and
- Figure 3 illustrates a high-efficiency lighting device that uses a generator of radiation according to the present invention.

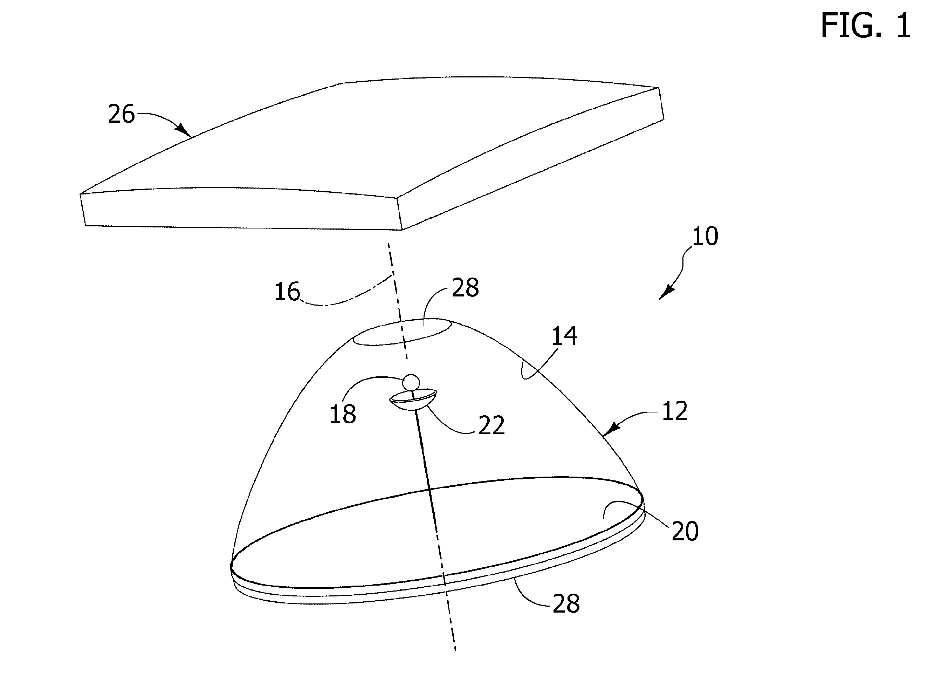

With reference to Figures 1 to 3, the number 10 designates a high-efficiency generator of controlled-spectrum radiation. The generator of radiation 10 comprises a hollow body 12 having an internal paraboloidal reflecting wall 14, which is symmetrical with respect to a longitudinal axis 16.

The generator of radiation 10 comprises a black body 18 set in the focus of the reflecting surface 14.

One end of the hollow body 12 is closed by a plane filter 20 orthogonal to the axis 16. The filter 20 is a non-dissipative filter designed to transmit radiation with a wavelength comprised in a pre-set band and to reflect towards the paraboloidal surface 14 the radiation with a wavelength falling outside the pre-set band. The internal space of the hollow body 10 is isolated from the outside and is in conditions of subatmospheric pressure, with a pressure as close as possible to zero. In this way, the hollow body 10 forms a substantially adiabatic cavity.

The generator of radiation 10 is associated to means for heating the black body 18 to a temperature of emission of electromagnetic radiation.

Set between the black body 18 and the filter 20 is a mirror 22 with a reflecting surface having a paraboloidal shape. The black body 18 is set in the focus of the mirror 22. The mirror 22 is set to prevent the radiation emitted by the black body 18 from reaching the filter 20 directly. The radiation emitted by the black body 18 that is intercepted by the mirror 22 is again reflected onto the black body 18.

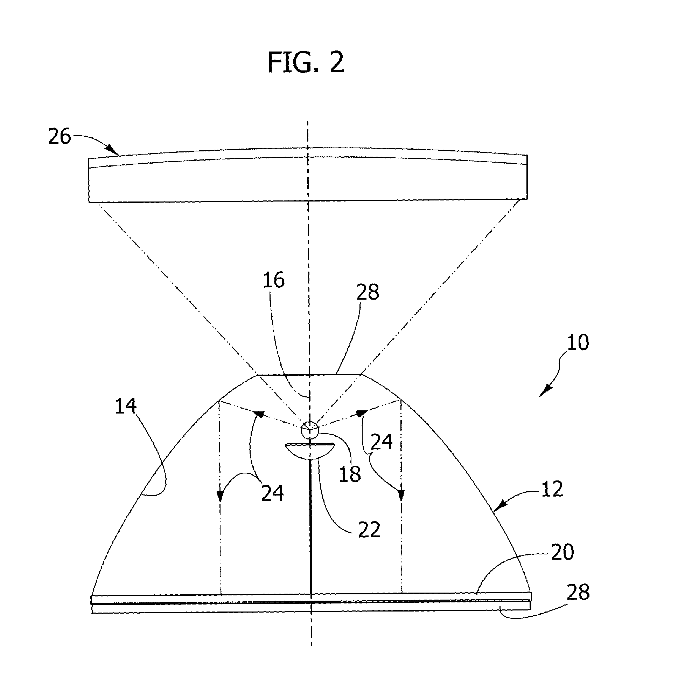

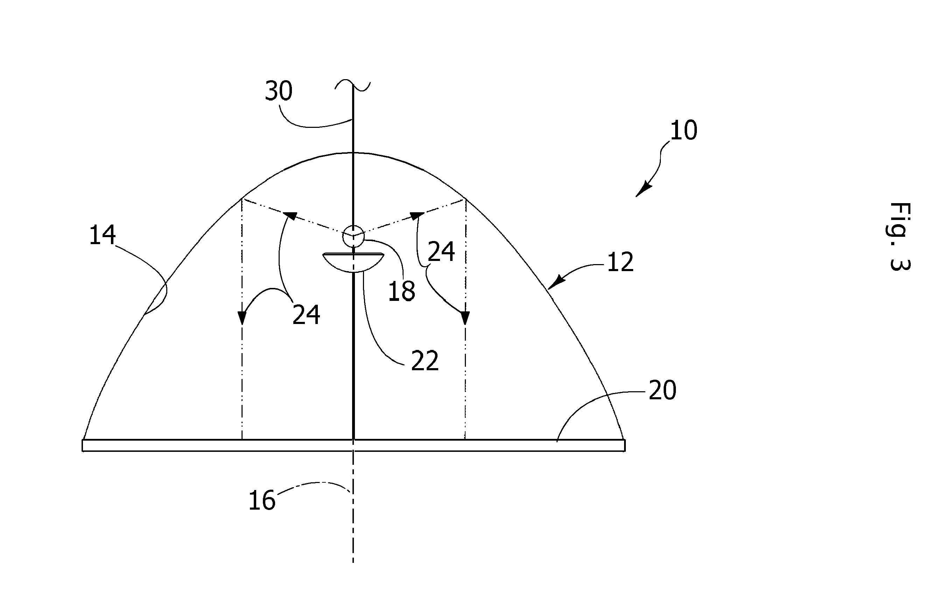

When the black body 18 is heated to a temperature of emission of electromagnetic radiation, it emits a wide-spectrum radiation. The radiation emitted by the black body 18 is reflected by the paraboloidal surface 14 in a direction parallel to the longitudinal axis 16, as indicated by the arrows 24 in Figures 2 and 3. All the radiation emitted by the black body 18 is directed orthogonally to the filter 20 since the paraboloidal mirror 22 prevents the radiation emitted by the black body 18 from reaching the filter 20 directly with directions other than those orthogonal to the surface of the filter 20. The fact that the direction of the radiation directed towards the filter 20 is always orthogonal to the filter is an essential condition for proper operation of the filter 20, which operates correctly only on collimated rays like the ones coming from the reflection of the surface 14. Given that the internal cavity of the body 12 is substantially adiabatic, the amount of energy dispersed through the side wall of the body 12 is substantially zero.

The filter 20 transmits only the radiant energy comprised in a pre-set band of wavelengths. The remaining energy is reflected substantially without any dissipation on the internal surface 14 of the body 12. Since the radiation reflected by the filter 20 is parallel to the axis 16, the paraboloidal reflecting surface 14 concentrates on the black body 18 the reflected radiation coming from the filter 20.

In this way, almost all the energy emitted by the black body 18 is emitted on the outside of the generator 10 in the form of collimated radiation with a wavelength comprised in a pre-set band, corresponding to the passband of the filter 20.

In the embodiment illustrated in Figures 1 and 2, the black body 18 is heated by solar radiation focused by means of a lens 26. A portion 28 of the surface of the body 12, orthogonal to the axis 16, is transparent to solar radiation. The black body 18 is set in the focus of the lens 26 so that the solar radiation focused by the lens 26 is concentrated on the black body 18.The black body can be replaced by a material that presents an anomaly in emission. In this way, it is possible to improve the efficiency of the system if the emission occurs especially in the band of the filter. In this embodiment, a photovoltaic element 28 is provided, arranged for receiving the radiation transmitted by the filter 20. Preferably, the filter 20 is formed by a thin layer of coating of the photovoltaic element 28. The filter 20 hence replaces the anti-reflection surface treatment normally provided on photovoltaic cells. Since photovoltaic cells have a high efficiency of conversion of solar energy into electrical energy only in a restricted band of wavelengths, the filter 20 is built so as to provide a passband corresponding to the band of wavelengths of maximum efficiency of the photovoltaic element 28. In this way, a high-efficiency thermo-photovoltaic element is obtained.

In the embodiment illustrated in Figure 3, the generator of radiation 10 is used for producing a high-efficiency lamp with a high quality of light. In this embodiment, the black body 18 is heated by means of electrical conductors 30. The radiant energy generated by the black body 18 is emitted by the filter 20 in the form of light radiation with a wavelength comprised in a pre-set band corresponding to the passband of the filter 20.

Of course, without prejudice to the principle of the invention, the details of construction and the embodiments may vary widely with respect to what has been described and illustrated herein, without thereby departing from the scope of the invention as defined by the ensuing claims.

## Claims

1. A high-efficiency generator of controlled-spectrum radiation, comprising:
- a substantially adiabatic hollow body (12) with an internal reflecting surface (14) having a paraboloidal shape;
- a black body (18) set in the focus of said paraboloidal reflecting surface (14);
- means (26, 28; 30) for heating the black body (18) to a temperature of emission of electromagnetic radiation;
- a non-dissipative plane filter (20) orthogonal to the longitudinal axis (16) of said paraboloidal reflecting surface (14), designed to transmit radiation with a wavelength comprised in a pre-set band and to reflect towards said paraboloidal surface (14) radiation with a wavelength external to said pre-set band; and
- a mirror (22) with a paraboloidal reflecting surface set between the black body (18) and said filter (20), said mirror (22) being set to prevent the radiation emitted by the black body (18) from reaching said filter (20) directly.

2. A thermo-photovoltaic device for the production of electrical energy, including a generator of radiation according to Claim 1, wherein said means for heating the black body (18) comprise a lens (26) for focusing solar radiation on the black body (18), in which the radiation coming out of said filter (20) is directed onto a photovoltaic element (28).

3. The thermo-photovoltaic device according to Claim 2, wherein said hollow body (12) has an outer wall with a window (28) transparent to solar radiation.

4. The thermo-photovoltaic device according to Claim 2, wherein said filter (20) is formed by a surface layer of said photovoltaic element (28).

5. An electric lamp comprising a generator of radiation according to Claim 1, wherein said means for heating the black body (18) comprise electrical conductors (30).

6. The electric lamp according to Claim 5, wherein the filter (20) transmits on the outside radiation in a band for biological uses.
